# EUROPEAN PATENT APPLICATION

(11) **EP 1 659 517 A1**
(43) Date of publication of application: **24.05.2006**
(21) Application number: 05110935.3
(22) Date of filing: 18.11.2005
(51) Int. Cl.: G06K 7/10, G06K 7/14

(54) **Method and apparatus for reading a barcode**

(30) Priority: 20.11.2004 KR 95545
(71) Applicant: Samsung Electronics Co, Ltd, Suwon-si, Gyeonggi-do 442-742 (KR)
(72) Inventor: Kim, Hyoung-il, Suwon-si, Gyeonggi-Do (KR); Kang, Kyung-pyo, Suwon-si, Gyeonggi-do (KR)
(74) Representative: Read, Matthew Charles

(57) **Abstract**

A method and apparatus for accurately reading a barcode with a low-resolution reflective sensor are provided. The apparatus includes: a scanning unit (310) for sensing a barcode and generating a scan signal; a searching unit (320) for calculating a rate of change of the scan signal, extracting sloped line segments from the scan signal, and searching for starting and ending points of the extracted sloped line segments to detect edges of the barcode's bars; and a barcode reading unit (330)for reading out the barcode based on distances between the detected edges.

## Description

The present invention relates to a method and apparatus for reading a barcode. More particularly, but not exclusively, the present invention relates to a method and apparatus for accurately reading a barcode using a low-resolution reflective sensor.

Recently, image printing apparatuses employing inkjet, dye sublimation thermal transfer, or direct thermal methods have been used for printing pictures taken by digital cameras. The image printing apparatus includes a print engine for printing an image and a feed roller for feeding a print medium. In the case of an inkjet image printing apparatus, an inkjet head is used for the print engine. In case of a dye sublimation thermal transfer or direct thermal image printing apparatus, a thermal printing head (TPH) is used for the print engine.

Various media can be used by an image printing apparatus when printing pictures. Use of a given media corresponds to the type of image being printed. A barcode containing information (hereinafter, referred to as "print medium information") about the print medium is written on a predetermined region of the print medium. By using the print medium information obtained from the barcode, higher quality images can be printed on the print medium by the printing apparatus.

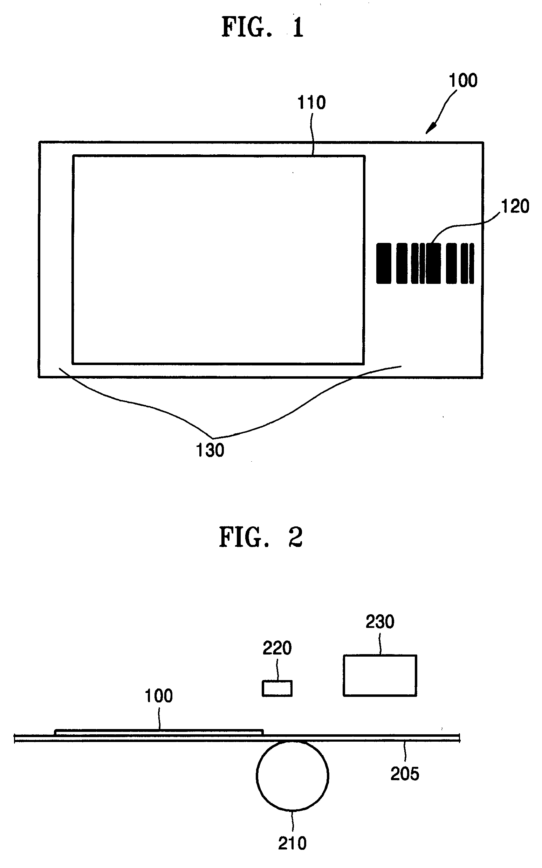

Figure 1 shows a print medium 100 on which a barcode 120 containing the print medium information is written. The barcode 120 is written on a predetermined region of the print medium 100. A predetermined image is printed on a paper portion 110 by using the print medium information obtained from barcode 120.

Figure 2 is a partial schematic showing components of an image printing apparatus for reading a barcode on a print medium and printing a predetermined image. The image printing apparatus includes a print medium 100, a feed roller 210, a barcode sensor 220, and a thermal printing head 230. The print medium 100 is fed to the barcode sensor 220 by the feed roller 210. The barcode sensor 220 reads the barcode to obtain print medium information in order to acquire information about the print medium 100. The thermal printing head 230 prints the predetermined image on a paper portion 110 of the print medium 100 by using the print medium information. Conventionally, in order to accurately read the barcode, the barcode sensor 220 must be a high resolution sensor that is able to resolve at least twice the minimum width of a barcode. High resolution sensors have a number of drawbacks. First, they are comparatively expensive and increase the production cost of the image printing apparatus. Secondly, they are relatively large and thus require additional space within the image printing apparatus. Further, since the scan signal output from the high resolution sensor depends on a distance between the print medium and the high resolution sensor, there is also a need to accurately control the distance between bars of a barcode as well as the distance between the print medium and the high resolution sensor.

Accordingly, there is a need for an improved method and apparatus for accurately reading a barcode without the need for a high resolution sensor.

An aspect of the present invention is to address at least the above problems and/or disadvantages and to provide at least the advantages described below. Accordingly, an aspect of the present invention is to provide an apparatus for accurately reading a barcode with a low resolution barcode sensor.

Another aspect of the present invention is to provide a method of accurately reading a barcode with a low resolution barcode sensor.

Yet another aspect of the present invention is to provide an image printing apparatus reading a barcode, containing information on a print medium, with a low resolution barcode sensor and printing a predetermined image. According to another aspect of the present invention, there is provided a barcode reading apparatus comprising a scanning unit for sensing a barcode and for generating a scan signal. The barcode reading apparatus further comprises a searching unit for calculating a rate of change of the scan signal, extracting sloped line segments from the scan signal, and searching for the starting and ending points of the extracted sloped line segments to detect edges of the barcode's bars. Further, the barcode reading apparatus comprises a barcode reading unit for reading the barcode based on distances between the detected edges.

The scanning unit may comprise a sensor for projecting a light onto the barcode, receiving light reflected from the barcode, and generating a sense signal corresponding to an intensity of the reflected light. The scanning unit may further comprise an analog-to-digital converting unit for converting the sense signal to a digital signal having a predetermined resolution. Additionally, the scanning unit may comprise a sampling unit for sampling the converted sense signal in units of the sampling interval to generate a scan signal.

The searching unit may comprise a change calculation unit for calculating a rate of change of the scan signal in units of the sampling interval. Moreover, the searching unit may comprise a first searching unit for searching for a zero rate of change and determining points having a zero rate of change as starting and ending points of the sloped line segments. Moreover, the searching unit may comprise a second searching unit for searching for edges of the barcode's bars based on the starting and ending points of the sloped line segments.

The barcode reading unit may comprise a width calculation unit for calculating the widths of the barcode's bars and spaces based on distances between the edges. Further, the barcode reading unit may comprise a reference width defining unit for defining reference widths of the bars and spaces based on the calculated widths of the bars and spaces. Also, the barcode reading unit may comprise a reading unit for determining the widths of the bars and spaces based on the reference widths in order to read the barcode.

According to another aspect of the present invention, there is provided a method of reading a barcode that comprises sensing a barcode and generating a scan signal; calculating a change of the scan signal, extracting sloped line segments from the scan signal, searching for the starting and ending points of the extracted sloped line segments to detect edges of the barcode's bars; and reading the barcode based on distances between the detected edges.

According to still another aspect of the present invention, there is provided an image printing apparatus comprising a scanning unit for sensing a barcode written on a print medium and generating a scan signal in units of a sampling interval. The image printing apparatus further comprises a searching unit for calculating a rate of change of the scan signal in units of the sampling interval, extracting sloped line segments from the scan signal, and searching for the starting and ending points of the sloped line segments to detect the edges of the barcode's bars. Further, the image printing apparatus comprises a barcode reading unit for reading the barcode based on the distance between the edges to acquire information on the print medium. Additionally, the image printing apparatus comprises a print engine for printing a predetermined image on the print medium. Moreover, the image printing apparatus comprises a print control unit for controlling the print engine based on the acquired information on the print medium.

Other objects, advantages, and salient features of the invention will become apparent to those skilled in the art from the following detailed description, which, taken in conjunction with the annexed drawings, discloses exemplary embodiments of the invention.

The above and other objects, features, and advantages of certain embodiments of the present invention will be more apparent from the following description taken in conjunction with the accompanying drawings, in which:
Figure 1 shows a print medium bearing a barcode that contains print medium information;
Figure 2 is a partial schematic showing components of an image printing apparatus for reading out a barcode on the print medium and printing a predetermined image;
Figure 3 is a functional block diagram of a barcode reading apparatus according to an embodiment of the present invention;
Figure 4 is a functional block diagram of a barcode scanning unit according to an embodiment of the present invention;
Figure 5 shows an example of a scan signal generated by the barcode scanning unit of Figure 4;
Figure 6 is a functional block diagram of a searching unit according to an embodiment of the present invention;
Figure 7A show an example of change signal for a 7-bar barcode corresponding to an absolute value of the rate of change of the scan signal of Figure 5;
Figures 7B show an example of the starting and ending points of the sloped line segments found in the change signals;
Figures 7C show an example of the edges of barcode's bars corresponding to the center-of-mass points that are searched based on the starting and ending points of the sloped line segments;
Figure 8 is a functional block diagram of a barcode reading unit according to an embodiment of the present invention;
Figure 9A shows examples of the widths of the bars and spaces calculated by the width calculation unit;
Figure 9B shows examples of the relative widths of the spaces determined by the reference width defining unit;
Figure 10 is a flowchart of a barcode reading method according to an embodiment of the present invention;
Figure 11 is a detailed flowchart of generating a barcode scan signal according to an embodiment of the present invention;
Figure 12 is a detailed flowchart of searching for an edges of the barcode's bars according to an embodiment of the present invention;
Figure 13 is a detail flowchart of reading a barcode according to an embodiment of the present invention; and
Figure 14 is a functional block diagram of an image printing apparatus according to an embodiment of the present invention.

Throughout the drawings, the same drawing reference numerals will be understood to refer to the same elements, features, and structures.The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention as claimed hereinafter. Also, descriptions of well-known functions and constructions are omitted for clarity and conciseness.

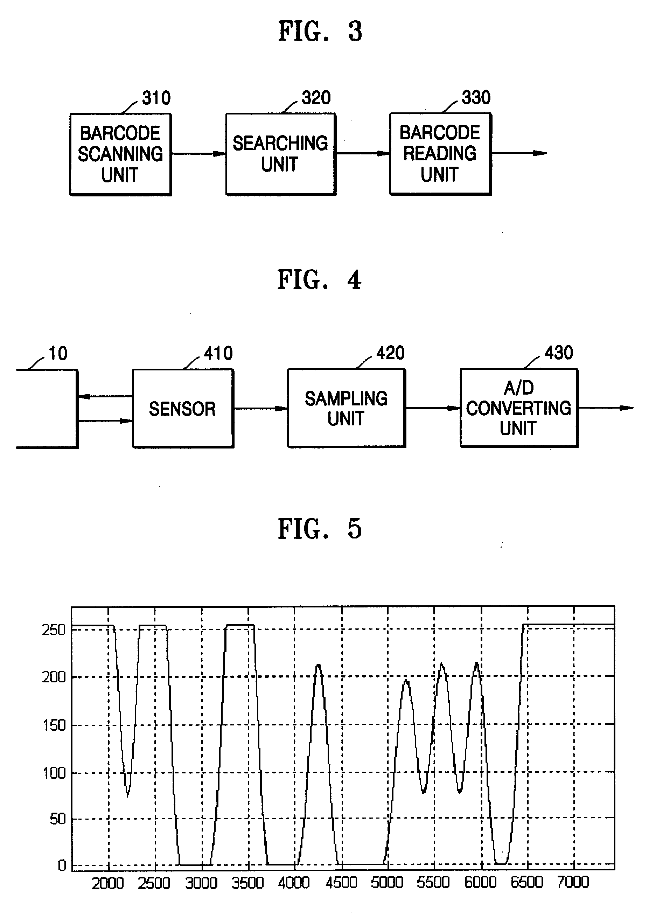

Figure 3 is a functional block diagram of a barcode reading apparatus according to an embodiment of the present invention. The barcode reading apparatus includes a barcode scanning unit 310, a searching unit 320, and a barcode reading unit 330.

The barcode scanning unit 310 senses a barcode written on a print medium to generate a sense signal and samples the sense signal at a predetermined sampling interval to generate a barcode scan signal. Preferably, the sense signal is filtered by a filter (not shown) to remove noise from the sense signal. The sense signal is converted into a digital sense signal, and the digital sense signal is sampled at the predetermined sampling interval to generate the scan signal.

The searching unit 320 calculates an absolute value of the rate of change of the scan signal, in units of the sampling interval, in order to create a change signal. In an alternative embodiment, a rate of change of the scan signal is calculated instead of an absolute value of the rate of change of the scan signal, in order to create the change signal. The change signal is used to extract sloped line segments from the scan signal. In an alternative embodiment, sloped line segments can be found from the change signal. Next, the searching unit 320 searches for starting and ending points of the extracted sloped line segments. Next, the searching unit 320 searches for edges of the bars based on the starting and ending points of the sloped line segments. Preferably, the change signal is filtered by a filter (not shown) to remove noise from the change signal.

The barcode reading unit 330 reads the barcode based on distances between the edges of the barcode's bars. More specifically, the widths of the barcode's bars and spaces are calculated based on the distances between the edges the barcode's bars based on the sloped line segments. Reference widths of bars and spaces are defined based on calculated widths of bars and spaces. The barcode is read by examining the reference widths of barcode's bars and spaces.

Figure 4 is a functional block diagram of the barcode scanning unit 310 according to an embodiment of the present invention. The barcode scanning unit 310 includes a sensor 410, an A/D converting unit 420, and a sampling unit 430. The sensor 410 projects light onto the barcode and receives light reflected back from the barcode. The sensor 410 uses the received reflected light to generate the sense signal according to the intensity of the reflected light. In general, the intensity of the light reflected from a bar of the barcode is less than the light reflected from the spaces between the bars. Therefore, the level of the sense signal corresponding to a bar is less than that of the sense signal corresponding to the spaces between the bars.

The A/D converting unit 420 converts the sense signal into a digital sense signal having a predetermined resolution by using an analog-digital converter. For example, the sense signal having voltages from 0.4V to 0.8V may be converted into a digital signal with a resolution of 8 bits by the A/D converting unit 420. The sampling unit 430 creates a scan signal by sampling the digital sense signal at a predetermined sampling interval. An example of a predetermined sampling interval is a sample taken once for every 1 /4800 inch that is sensed. In an alternative embodiment, the sampling unit 430 receives the scan signal and outputs the sampled signal to the A/D converting unit 420 which then outputs the scan signal. Figure 5 shows an example of a scan signal generated by the sampling unit 430, A/D converting unit 420, and sensor 410 of the barcode scanning unit 310.

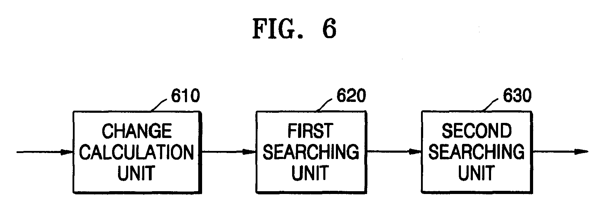

Figure 6 is a functional block diagram of the searching unit 320 according to an embodiment of the present invention. The searching unit 320 includes a change calculation unit 610, a first searching unit 620, and a second searching unit 630.

The change calculation unit 610 calculates an absolute value of the rate of change of the scan signal, in units of the sampling interval, to generate a change signal. Due to the lower resolution of the scan sensor, the resulting scan signal obtained from the barcode has sloped lines segments at the boundary regions between the bars and spaces of the barcode. By examining a rate of change of the scan signal, a sloped line segment representing a boundary region, can be extracted. An extracted sloped line segment appears as a roughly parabolic signal in the change signal.

The first searching unit 620 searches for starting and ending points of the sloped line segments. At the starting and ending points, the change signal generated from the change calculation unit 610 is zero i.e. there is an abrupt change in the rate of change signal at the edge of the corresponding bar in the barcode. As such, the starting and ending points can be identified using the change signal. In operation, the first searching unit 620 searches for the starting and ending points of the sloped line segments by searching for instances where the scan signal indicates that the rate of change of the scan signal is zero. However, in some applications, other methods may be applied to search for the starting and ending points of the sloped line segments.

The second searching unit 630 searches for edges of the barcode's bars based on the starting and ending points of the sloped line segments. More specifically, the second searching unit 630 searches for the edges of the barcode's bars from the starting and ending points of the sloped line segments searched for by the first searching unit 620. Preferably, the edges are found by using an edge-peak method or a center-of-mass method. In the edge-peak method, a point having the largest change is searched for from the change signal. In the center-of-mass method, a center of mass of the total change is searched for from the change signal.

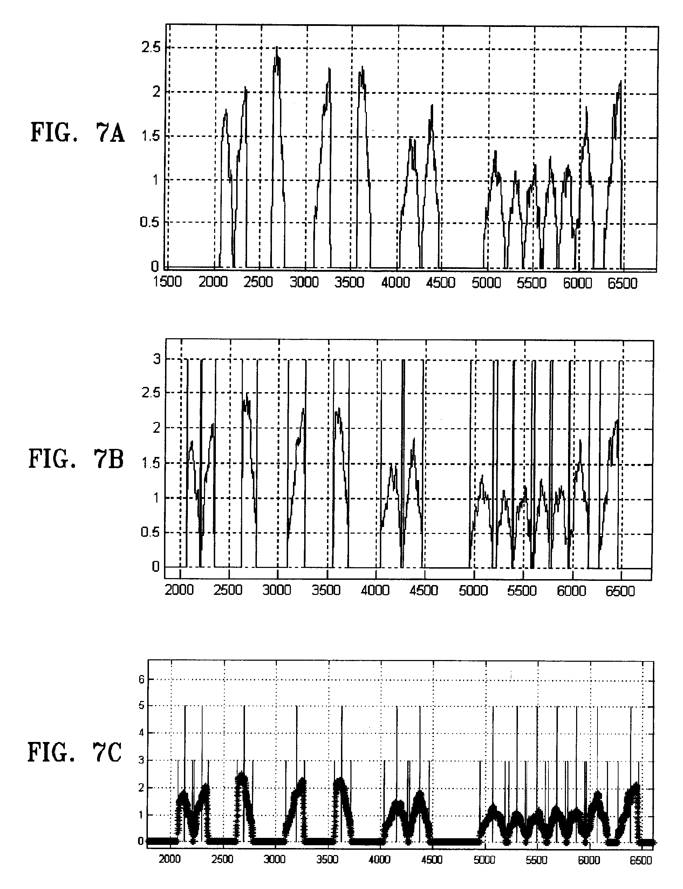

Figure 7A shows an example of change signal for a 7-bar barcode corresponding to an absolute value of the rate of change of the scan signal of Figure 5. As can be seen in Figure 7A, fourteen sloped line segments, represented by roughly parabolic shapes, are extracted from the scan signal. The fourteen extracted sloped line segments are generated based on the change signal. Figure 7B shows the starting and ending points of the sloped line segments found in the change signals by the first searching unit 620. Figure 7C shows the edges of barcode's bars corresponding to the center-of-mass points that are searched based on the starting and ending points of the sloped line segments.

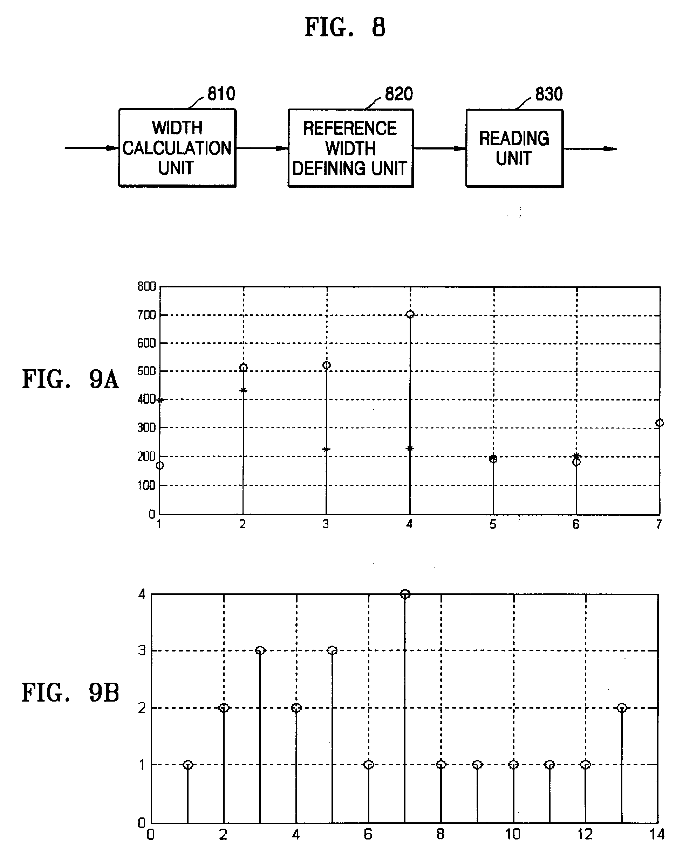

Figure 8 is a functional block diagram of a barcode reading unit 330 according to an embodiment of the present invention. The barcode reading unit 330 includes a width calculation unit 810, a reference width defining unit 820, and a reading unit 830.

The width calculation unit 810 calculates distances between the edges and widths of the bars and spaces based on the distances between the edges. More specifically, the width of a bar is obtained by calculating the distance between a pair of edges, based on the edges found for a pair of sloped line segments. The width of a space is obtained by calculating the distance between adjacent edges, based on the edges found for adjacent sloped line segments.

The reference width defining unit 820 defines widths of bars and spaces based on relative widths of bars and spaces calculated by the width calculation unit 810.

The reading unit 830 determines the widths based on the reference widths to read the barcode.

Figure 9A and Figure 9B shows examples of the widths of bars and spaces found by the barcode reading unit 330. Figure 9A shows the widths of the bars and spaces calculated by the width calculation unit 810. The "*" symbols indicate the widths of the bars, and "O" symbols indicate the widths of the spaces. Figure 9B shows the relative widths of the spaces determined by the reference width defining unit 820. The reference width defining unit 820 defines the reference widths by using relative values of the widths of the bars and spaces calculated by the width calculation unit 810. For example, referring to Figure 9A and Figure 9B, the widths of the bars and spaces around "200", "400", "500", and "700" are defined as 1, 2, 3, and 4, respectively.

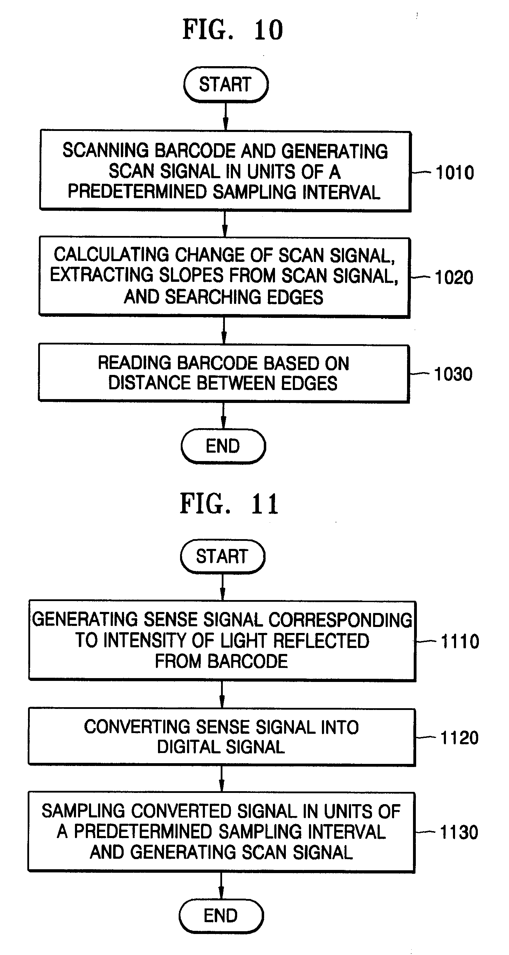

Figure 10 is a flowchart of a barcode reading method according to an embodiment of the present invention. First, a predetermined barcode is sensed to generate a sense signal; the sense signal is converted into a digital sense signal by an analog-to-digital converter; the digital sense signal is sampled at a predetermined sampling interval to generate a scan signal (operation 1010). An absolute value of the rate of change of the scan signal is calculated in units of sampling interval to extract sloped line segments from the scan signal; and the sloped line segments are searched for edges of the barcode's bars, based on starting and ending points of the extracted sloped line segments (operation 1020). Widths of the bars and spaces of the barcode are calculated based on the found edges; and the barcode is read based on the calculated widths of the bars and spaces (operation 1030).

Figure 11 is a detailed flowchart of method for generating a barcode scan signal according to an embodiment of the present invention. First, a sense signal is generated corresponding to an intensity of light reflected from the barcode (operation 1110). More specifically, light is projected onto the barcode by a barcode sensor, and the projected light is reflected back off the barcode. The barcode sensor generates sense signals corresponding to the different intensities of the light reflected from the bars and spaces of the barcode. Next, the sense signal is converted into a digital signal (operation 1120). The sense signal is an analog signal corresponding to the intensity of the reflected light.

The analog sense signal is converted in to a digital signal having a predetermined resolution with respect to a predetermined sampling interval. The digital signal is sampled in units of the predetermined sampling interval to generate a scan signal (operation 1130).

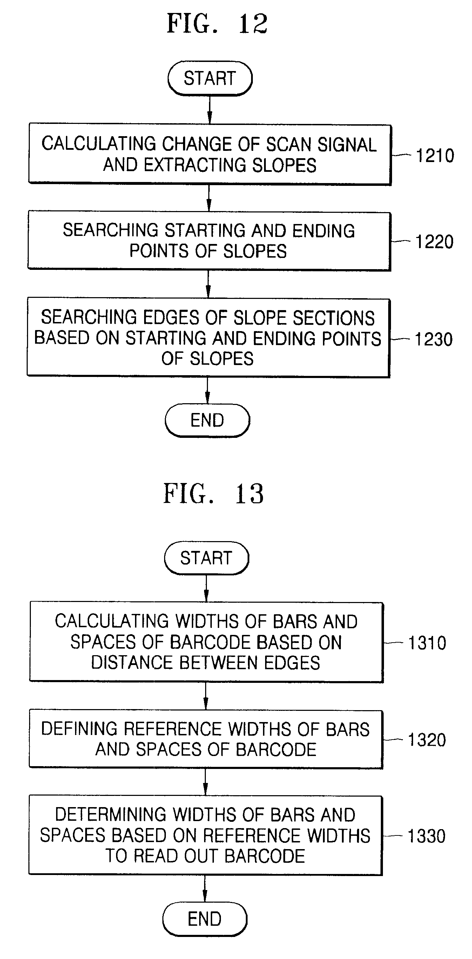

Figure 12 is a detailed flowchart of a method for searching edges of a barcode's bars according to an embodiment of the present invention. An absolute value of the rate of change of the scan signal is calculated to extract sloped line segments from the scan signal (operation 1210). Here, the extracted sloped line segments can be generated as a change signal having a parabolic shape. For example, when seven bars are sensed and the absolute value of the rate of change of the scan signal is calculated, two parabolic curves corresponding to each bar are generated as part of the change signal. By searching for points having zero change in sloped line segments of the generated change signal, the starting and ending points of the sloped line segments are determined (operation 1220). Next, the sloped line segments are searched for to find edges of the barcode's bars, based on the starting and ending points of the searched sloped line segments (operation 1230). The edges can be searched for by using an edge-peak method or a center-of-mass method. In the edge-peak method, a point having the largest change is searched for in the change signal. In the center-of-mass method, a center of mass of the total change is searched for in the change signal. However, in some applications, other methods may be applied for detecting the edges.

Figure 13 is a detail flowchart of a method for reading a barcode according to an embodiment of the present invention. Widths of the bars and spaces of the barcode are calculated based on the distance between the edges (operation 1310). Reference widths of the bars and spaces are defined based on the relative widths between the widths of the bars and spaces (operation 1320). Next, the widths of the bars and spaces are determined based on the reference widths, and the barcode is read based on the determined widths (operation 1330).

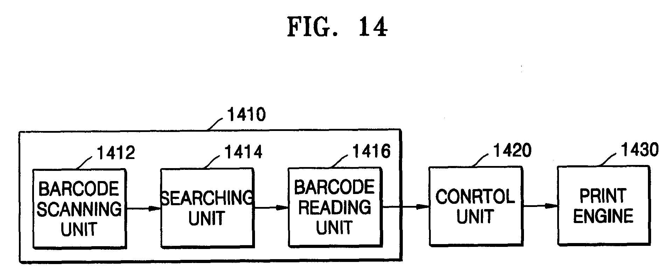

Figure 14 is a functional block diagram of an image printing apparatus according to an embodiment of the present invention. The image printing apparatus includes a print medium information acquisition unit 1410, a control unit 1420, and a print engine 1430. A barcode is written on a print medium on which a predetermined image is printed. The print medium information acquisition unit 1410 includes a barcode scanning unit 1412, a searching unit 1414, and a barcode reading unit 1416. The print medium information acquisition unit 1410 acquires the print medium information by reading the barcode written on the print medium.

The control unit 1420 controls a print method of the print engine 1430 based on the acquired print medium information. Optics such as a laser scanning unit (not shown) and a transfer unit (not shown) of the print engine 1430 form a toner image corresponding to a predetermined image on a photosensitive drum (not shown) that is under the control of the control unit 1420. The toner image is transferred to the print medium by a transfer roller (not shown). According to a barcode reading method and apparatus, widths of the bars and spaces of a barcode are determined based on the edges between the starting and ending points of sloped line segments in the scan signals of the barcode to be read. Thereby, it is possible to accurately read a barcode with an inexpensive small-sized low-resolution optical sensor.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), and storage media such as carrier waves (e.g., transmission through the Internet).

While the invention has been shown and described with reference to certain embodiments thereof, it will be understood by those skilled in the art that various changes in form and details may be made therein without departing from the scope of the invention as defined by the appended claims.

## Claims

1. Barcode reading apparatus comprising:
a scanning unit (310) for scanning a barcode to produce a scan signal;
a searching unit (320) for determining the rate of change of the scan signal and identifying points where the rate of change undergoes a change corresponding to the edge of a bar in the barcode so as to identify the edges of the bars in the barcode, and
a barcode reading unit (310) to provide barcode information corresponding to the data recorded in the barcode, based on the edges of the barcode identified by the searching unit.

2. A barcode reading apparatus comprising:
a scanning unit (310) for sensing a barcode and generating a scan signal;
a searching unit (320) for calculating a rate of change of the scan signal, extracting sloped line segments from the scan signal, and searching for starting and ending points of the extracted sloped line segments to detect edges of the barcode's bars; and
a barcode reading unit (330) for reading the barcode, based on distances between the detected edges.

3. The barcode reading apparatus according to claim 1 or 2, wherein the scanning unit senses the barcode to generate barcode scan signals in units of a predetermined sampling interval.

4. The barcode reading apparatus according to any preceding claim, wherein the scanning unit comprises:
a sensor (410) for projecting light onto the barcode, receiving light reflected from the barcode, and generating a sense signal corresponding to an intensity of the reflected light;
an analog-to-digital converting unit (430) for converting the sense signal into a digital sense signal having a predetermined resolution; and
a sampling unit (420) for sampling the digital sense signal in units of the sampling interval to generate a scan signal.

5. The barcode reading apparatus according to any preceding claim, wherein the searching unit (320) comprises:
a change calculation unit (610) for calculating a rate of change of the scan signal;
a first searching unit (620) for searching for a zero change of the scan signal and determining points having the zero rate change of the scan signal as starting and ending points of the sloped line segments; and
a second searching unit (630) for searching for edges of the barcode's bars, based on the starting and ending points of the sloped line segments.

6. The barcode reading apparatus according to any preceding claim, wherein the searching unit (320) is so configured that a point corresponding to a maximal rate of change of the scan signal is determined to be an edge of one of the barcode's bars.

7. The barcode reading apparatus according to any one of claims 1 to 5, wherein the searching unit (320) is so configured that the rate of change of the scan signal is calculated for a plurality of successive points along the barcode, and a center-of-mass point is determined to be an edge of one of the barcode's bars.

8. The barcode reading apparatus according to any preceding claim, wherein the barcode reading unit (330) comprises:
a width calculation unit (810) for calculating widths of bars and spaces of the barcode, based on distances between the edges;
a reference width defining unit (820) for defining reference widths of the bars and spaces, based on the calculated widths of the bars and spaces; and
a reading unit (830) for determining the widths of the bars and spaces, based on the reference widths, for reading the barcode.

9. A barcode reading apparatus according to any preceding claim incorporated in an image printing apparatus, the barcode reader apparatus being configured to sense a barcode written on a print medium, the printing apparatus including:
a print engine (1430) for printing a predetermined image on the print medium; and
a print control unit (1420) responsive to the barcode reading apparatus for controlling the print engine based on information sensed from the barcode on the print medium.

10. A method of reading a barcode, comprising the steps:
(a) sensing a barcode and generating a scan signal;
(b) calculating a rate of change of the scan signal, extracting sloped line segments from the scan signal, searching for starting and ending points of the extracted sloped line segments to detect edges of the barcode's bars; and
(c) reading the barcode based on distances between the detected edges.

11. The method according to claim 10, wherein, in step (a), the scan signal is generated by sensing and sampling the barcode in units of a predetermined sampling interval.

12. The method according to claim 11, wherein step (a) comprises the steps:
(a1) projecting a light onto the barcode, receiving light reflected from the barcode, and generating a sense signal corresponding to an intensity of the reflected light;
(a3) converting the sense signal into a digital sense signal having a predetermined resolution; and
(a2) sampling the digital sense signal in units of the sampling interval to generate a scan signal.

13. The method according to claim 10, wherein the operation (b) comprises:
calculating a rate of change of the scan signal in units of the sampling interval;
searching for a zero rate of change of the scan signal and determining points having the zero rate of change of the scan signal as starting and ending points of the sloped line segments; and
searching for edges of the barcode's bars based on the starting and ending points of the sloped line segments.

14. The method according to claim 12, wherein the point having a greatest rate of change of the scan signal is determined to be an edge of one of the barcode's bars.

15. The method according to claim 12, wherein all of the points of the rate of change of the scan signal is calculated, and a center-of-mass point is determined to be an edge of one of the barcode's bars.

16. The method according to claim 12, wherein step (c) comprises the steps:
(c1) calculating widths of bars and spaces of the barcode based on distances between the edges;
(c2) defining reference widths of the bars and spaces based on the calculated widths of the bars and spaces; and
(c3) determining the widths of the bars and spaces based on the reference widths to read the barcode.

17. A computer program embodied on a computer readable medium for reading a barcode comprising:
a sensing source code segment for sensing a barcode and generating a scan signal;
a calculating source code segment for calculating a rate of change of the scan signal, extracting sloped line segments from the scan signal, and searching for starting and ending points of the extracted sloped line segments to detect edges of the barcode's bars; and
a reading source code segment for reading the barcode based on distances between the detected edges.
